# EUROPEAN PATENT SPECIFICATION

(11) **EP 0 656 300 B1**
(45) Date of publication and mention of the grant of the patent: **10.06.1998**
(21) Application number: 94850211.7
(22) Date of filing: 24.11.1994
(51) Int. Cl.: B65D 77/20, B65D 55/06, B65D 50/06, B65D 17/40, B65D 43/03

(54) **Tamper-evident sealed packaging container and its method of manufacture**
Originalitätssicherungsverschluss für Verpackungsbehälter und Herstellungsverfahren
Récipient d'emballage avec fermeture inviolable et procédé de fabrication

(30) Priority: 01.12.1993 SE 9304003
(43) Date of publication of application: 07.06.1995
(73) Proprietor: AB AKERLUND & RAUSING, S-221 01 Lund (SE)
(72) Inventor: Nideborn, Karl, S-222 51 Lund (SE); Hagelqvist, Per, S-222 29 Lund (SE); Holmberg, Yngve, S-268 00 Svalöv (SE)
(74) Representative: Harrison, Michael Charles

(56) References cited:
- SE-B- 453 820
- SE-B- 457 948
- US-A- 2 998 158
- US-A- 4 006 839
- US-A- 4 254 891
- US-A- 4 759 463
- US-A- 5 114 068

## Description

### Field of the invention

The invention relates to a packaging container as defined in the first part of claim 1 and to a method of producing a packaging container as defined in the first part of claim 11.

### Background to the invention

In US-A-3 483 964. a container is disclosed which is essentially a blister package having a cover sealed to a tray portion by a single strong seal. In order to provide a sealed yet openable package, the single seal is spaced outwardly of a score line running around the package. The seal in this disclosure must not cross the score line since this would, as stated in the document, re-strengthen the score line and thus not readily permit rupture thereof for opening the package.

The problem of providing tamper evidence is present in many packaging fields nowadays and has now also been seen as an area of concern in for example margarine type packs, commonly known as table packs. In these packs, a replaceable cover or lid is provided on top of the tray holding the product contents. Since easy access as well as a gas-tight seal is required, a separate inner membrane (e.g. made from a laminate of some type) is fitted in a gas-tight manner to the top of the tray below the cover. After removing the lid, the membrane is either pierced or removed, whereupon the contents are accessible and the lid merely needs to be replaced to provide a lightly re-closed configuration. For the consumer it is thus impossible, without opening the lid before purchasing the container, to detect whether the container has been opened. This is similarly the case for those working at the check-out counters who should warn purchasers in cases of visible tampering. Skilful replacement of the membrane by a tamperer would anyway normally avoid detection.

A further document, US-A-2998158 corresponding to the first part of claim 1 and claim 11 discloses a tamper evident structure having an outer permanent seal between a flange of the cover and the lid thereof. Inside this seal there is a line of weakening such that the outer seal can be removed as a security band. When the band is removed a further frictional seal connection is still maintained between the cover and the container allowing the container to be opened and reclosed.

In US-A-4006839 a similar arrangement to that in US-A-2998158 is disclosed, whereby a frictional engagement is provided between the cover and the container when the outer seal is removed. The frictional engagement between the cover and the container is arranged as a snap-fit closure allowing snap-fit reclosure of the container.

The main problem to be solved with the present invention is thus the provision of tamper evidence means whilst still maintaining a gas-tight yet openable seal for initial sealing of the contents in the package. This should of course preferably be achieved without requiring drastic changes to the costly manufacturing or filling equipment which is in place today, since the refitting of entirely new equipment would be prohibitive.

A further problem which is to be solved is the provision of tamper evident closure means in such a way as to dispense with the membrane entirely. This is an important aspect in the sense that efficient recycling of the containers after their use is problematic if the membrane is not made of the same material as the rest of the container and lid, due to the fact that a check must then be made (before recycling) that the membrane, which commonly contains a metal foil, has been fully removed from the package.

### Summary of the invention

One or more of the above and further problems are solved in accordance with the present invention by the provision of the features defined in claim 1 and claim 11 respectively.

Preferred features of the invention are defined in the dependent claims.

### Brief description of the drawings

The invention will now be described in more detail with reference to the embodiments of the invention shown in the accompanying drawings, in which:
- Fig.1: shows a perspective view of a packaging container according to the invention in a closed and sealed state,
- Fig.2: shows an enlarged cross-sectional view through a portion of the container of Fig.1 as viewed along line II-II, the cardboard outer tray portion having been removed,
- Fig.3: shows a plan view from above of the container of Fig.1 in which the guarantee band has been removed,
- Fig.4: shows a sectional view through the flange portions of two container lids, stacked one on top of the other, for use with the container of the invention, and
- Fig.5: shows a second embodiment of a corner of a lid used in accordance with the invention having a particular perforation line shape.

### Detailed description of preferred embodiments

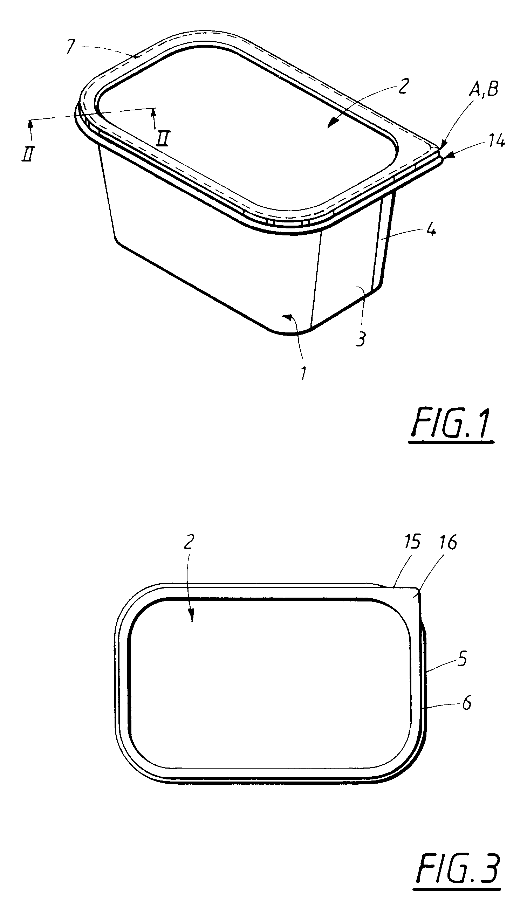

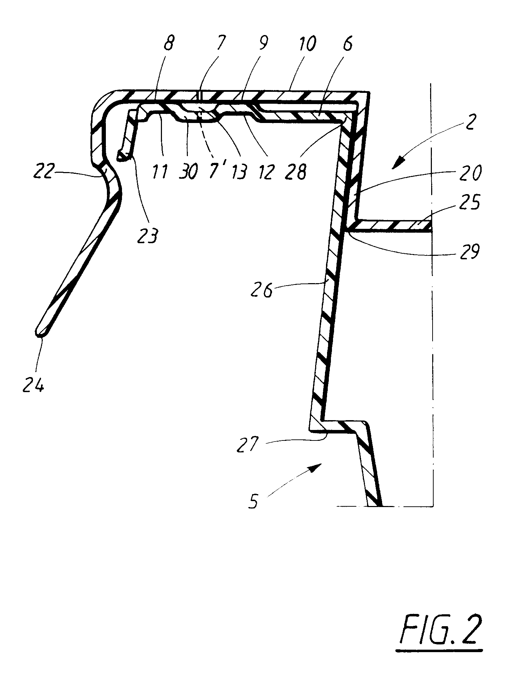

The packaging container of Fig.1 depicts a closed and sealed container comprising two main portions, a tray portion 1 and a cover or lid portion 2. The package illustrated has a cardboard outer stiffening layer formed by a folded and connected arrangement of cardboard panels 3 and 4. On the inside of the cardboard layer is an inner plastics tray 5 (see Fig.2) which has been e.g. thermoformed, with a flange 6 at its upper edge, in a manner known per se. The actual structure of the tray is however of no particular importance for describing the invention since any tray which has a corresponding upper flange surface will be suitable. Where the full recycling advantages of the invention are to be obtained however, the tray portion 1, if this is formed from two tray layers for example, should have means for easy separation of the layers (e.g. plastics and cardboard), unless the layers are of the same material.

The lid and its connection to the tray will now be described also with reference to Fig.2. The lid 2 of the container is preferably thermoformed from a material which has heat sealing characteristics at least in the regions which will form seal areas. The lid is provided with a line of weakening such as a perforation line 7 which is shown in dashed lines in Fig.1 running around the cover periphery and preferably extending out to the periphery of the lid at one or more locations (as shown e.g. in Fig.1 at the corner 14) such that the line 7 has a common starting point A and finishing point B. This perforation line 7 is made up of spaces interconnected by material bridge portions which have such a strength that they can be ruptured relatively easily upon gripping and pulling of an opening portion (e.g. outer edge of the cover flange) by a user. Alternatively a deep score line could be used, although this is a less preferable embodiment.

A first, outer seal 8 and a second, inner, peelable and gas-tight seal 9 are formed on either side of the perforation line 7, between the flange 6 of the plastics tray 5 and the edge or flange portion 10 of the lid 2. Each of the seals 8 and 9 extends round substantially the whole periphery of the lid. A heat seal is the most preferable seal to use in order to achieve the required peel strength in this type of application, since the ease of recycling is enhanced. However the invention should not be seen as limited to this type of seal since other peelable seals such as those made with adhesives and/or seal strength-reducing primers or other adhesives also fall within the scope of the invention.

Thus, in this preferred embodiment the heat seals as shown are formed by applying heat and pressure to the areas positioned immediately either side of the perforation line 7, such that the first 8 and second 9 seals thus formed are separated by a zone 13 of non-sealing. However it is clear that the first 8 and second 9 seals could equally be formed by one continuous seal crossing the line of weakening 7 which itself thus delimits said first and second seal areas.

In Fig.2 a zone of non-sealing has been represented by the area 13 under the perforation line 7. This area is not in contact with the flange 10 of the lid since it has been formed by the part of the sealing tool (or tools) which have upwardly deformed the two areas 11 and 12 due to the application of heat and pressure.

In a preferred embodiment of the invention the outer seal 8 is arranged to be peelable and to have a peel strength which is greater than the peel strength of the inner seal 9. The container integrity required for the handling procedures is thus significantly improved in this case. It is also possible to arrange strong and weak peel areas even where one continuous seal is arranged to pass over the perforation line 7 merely by appropriate sealing measures.

The weakening line 7 is formed in the cover 2 by a stamping machine or the like preferably at the point of manufacture of the lids. In this way, the product supplier who purchases said containers and lids does not need to add this line of weakening himself. However it is also possible that the line 7 may be incorporated after applying the lid 2 and sealing it to the tray 5. This may be accomplished for example by punching through the flanges 6 and 10 of the lid and tray in one action, such that the perforations in the two layers 6 and 10 would overlie each other as shown in Fig.2. The dashed line indication of the perforation line 7' has been added in the tray flange 6 in Fig.2 to show its position in such a case.

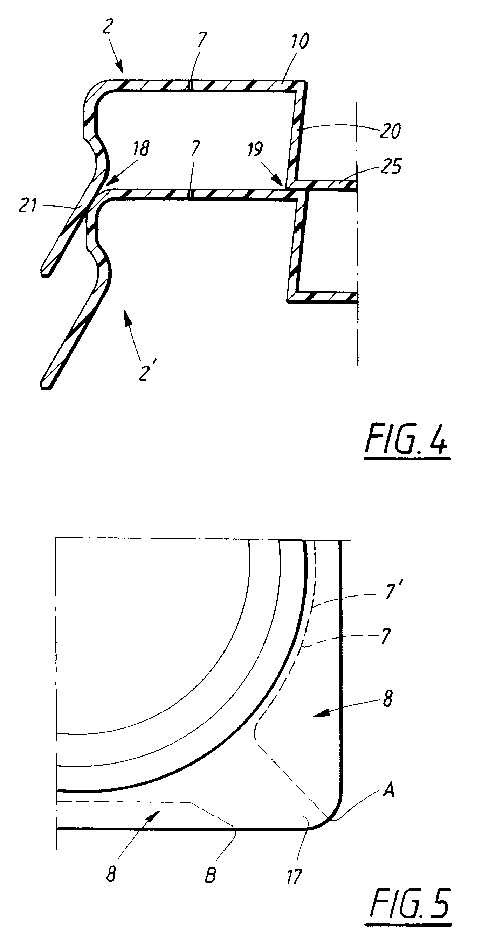

Fig.3 shows the container of Fig.1 in plan view wherein the user will already have gripped the cover 2 at some convenient location such as the corner 14 (see Fig.1) and pulled the same such that the area of the cover 2 lying outside the line 7 (i.e. including the first seal area) will be removed as a strip of material. The edge 15 of the lid 2 remaining will thus correspond to the location of the perforation line 7. In this way the consumer is provided with a guarantee band which is evidence of whether the container has been tampered with. If desired the band may also be coloured or otherwise identified.

In the case where the first seal is peelable, the outer part of the flange 6 of the plastics tray 5 will be visible after removing the guarantee band as shown in Fig.3.

The inner second seal 9 will at this stage still be intact and gas-tight. As will be seen, a grip tab 16 is left after removal of the guarantee strip and the user merely needs to pull this upwardly to peel open the seal 9 in order to reach the contents without the need to remove any further membrane. It will thus be apparent that a significant material saving has been made since the membrane can be dispensed with.

If desired, the second peelable seal 9 may be supplemented, for example at one edge or at a location along one an edge, by a more permanent seal (not shown) such that the cover is peeled open but can hinge about said more permanent seal.

A further embodiment of a perforation line is shown in Fig.5. In this embodiment, the line 7 extends from a starting point "A" on the edge of the lid 2 around the container periphery to the finishing point "B". The area outside the line 7 will thus partially or wholly be an area of sealing corresponding to the first seal 8. Due to the enlarged portion of the lid flange outside the line 7 and above (with reference to the figure) the point "A", this will provide a convenient gripping location and thus the starting point for guarantee band removal. It may also be marked as such for the consumer. Once the band has been removed the large projecting tab portion 17 will remain for easy gripping and peeling open of the second seal 9. Fig.5 can also be an example of the appearance of the upper edge of the container having a continuous seal, where the possibility of punching a perforation line 7, 7' through both flanges 6 and 10 is particularly advantageous.

Fig.4 depicts an enlarged scale sectional view, similar to that shown in Fig.2, through two container lids 2 and 2' stacked upon each other ready for de-stacking. As can be seen the upper lid 2 is supported by two downwardly pointing wall portions 20 and 21 at two locations 18 and 19 on the lower lid 2'. This manner of support allows stability in the stack of lids yet prevents wedging of the individual lids.

Use is made of this particular lid formation to allow an "internal" reclosure of the package after having removed the lid 2 (i.e. after seal 9 has been peeled open). Presently known packages have external reclosure means positioned on the outer edge of the container lid and tray (which can be compared to the surfaces 22 and 23 as shown in Fig.2), but this will not function with the container of this embodiment since the portion of the lid starting at point 24 all the way up to line 7 will be removed as a guarantee band.

In the embodiment shown in Fig.2, a "lowered" portion 20, 25 of the lid (i.e. lower with respect to the flange upper surface 10) is located inside the second seal 9. In this way the lowered portion 20, 25 allows reclosure of the container by cooperation with correspondingly placed means 26 on the tray on the inside thereof.

In Fig. 2 the means 26 comprises for example one or more dovetail-shaped (i.e. dovetail shaped when seen face-on and having the widened portion of the dovetail at the lower end) de-stacking protrusions used to prevent wedging between stacked trays by means of the lower edge 27 of the dovetail which will lie in contact with the corresponding upper edge 10 of the container below it (not shown).

Thus the wall portion 20 of the cover, which extends downwardly and outwardly towards the periphery of the cover will cooperate with the similarly angled surface 26 of the dovetail at the upper edge of the tray.

Reclosure is thus effected by a light pressure on the lid 2 such that the edge 29 of the lid de-stacking surface will deflect past the tray upper edge 28 and into the position shown in Fig.2.

In order to produce the container of the invention, one method will briefly be described in the following with respect to Fig.2. A tray 1 is first filled with contents (not shown) and then the lid 2 having a pre-punched perforation line 7 is applied thereto. The overlapping horizontal flanges 6 and 10 are subsequently sealed together, for example by the application of heat and pressure. Sealing may be effected at two separate locations (as shown in Fig.2) or over one complete area (not shown). In the case that two separated areas either side of the line 7 should be sealed, the seals may be formed by the use of one or more sealing tools for forming the underside 11, 12 of said seals 8, 9, said sealing tools for example having inner and outer sealing tool portions separated by a distance so as to form a gap therebetween such that the flange part 30 of the tray 1 that lies in said gap is not sealed or in any way in contact with said cover 2.

Whilst the invention has been described with reference to certain preferred embodiments of the invention it should be understood that the invention is not limited to such embodiments but can be varied within the scope of the appended claims.

## Claims

1. Packaging container comprising a tray (1) and a cover (2), said cover (2) being sealed to an upper edge (6) of said tray along a first seal (8) in the flange region (6) of said tray, wherein said first seal (8) lies outside a line of weakening (7) in said cover (2), wherein a second seal (9) is provided between the cover (2) and the tray flange (6), **characterized in that** said second seal (9) is a peelable, yet gas-tight seal positioned inside said line of weakening (7).

2. Packaging container according to claim 1, **characterized in that** said first seal (8) is a peelable seal.

3. Packaging container according to either of claims 1 or 2, **characterized in that** the line of weakening (7) lies in an area of the cover which is not attached to the tray flange (30) beneath it.

4. Packaging container according to either of claims 2 or 3, **characterized in that** said first seal (8) and said second seal (9) are separated and in that said first seal has a greater peel strength than said second seal.

5. Packaging container according to either of claims 1 or 2, **characterized in that** said first (8) and said second (9) seals are formed by one continuous seal without a gap therebetween, said line of weakening (7) thus forming the delimitation between said first and second seals.

6. Packaging container according to any preceding claim, **characterized in that** said line of weakening (7) has a starting point (A) and a finishing point (B) at the outermost edge of the cover (2) and which extends first inwardly to be located between said first (8) and second seals (9).

7. Packaging container according to any preceding claim, **characterized in that** said line of weakening (7) is a perforation line (7, 7') extending through both said cover (2) and said tray flange (6).

8. Packaging container according to any preceding claim, **characterized in that** said line of weakening (7) is a perforation line, and in that the finishing point (B) of said perforated line (7) is separated from the starting point (A) thereof so as to form a grip flap (17) for said cover for opening of the second seal (9).

9. Packaging container according to any preceding claim, **characterized in that** said cover has a lowered portion (20, 25) located inwardly of said second seal (9), and in that said lowered portion allows reclosure of the container by cooperation with corresponding means (26) on the tray inside thereof.

10. Packaging container according to claim 9, **characterized in that** said lowered portion (20) is at least one wall portion of said cover, extending in a direction downwardly and outwardly towards the periphery of the cover and which cooperates with at least one similarly angled surface (26) at the upper edge of the tray, said similarly angled surface being a de-stacking protrusion.

11. Method of producing a packaging container comprising a tray (1) and a corresponding cover (2), whereby said cover is applied onto said tray and sealed to a flange portion (6) thereof by a first seal (8) lying outside a line of weakening (7) formed in said cover close to its periphery, **characterized in that** said cover (2) is sealed to said tray (1) on the inner side of said line of weakening by an inner, gas-tight and peelable second seal (9).

12. Method according to claim 11, **characterized in that** said seals (8, 9) are formed by the use of one or more sealing tools for forming said seals (8, 9), said sealing tools having inner and outer sealing tool portions separated by a distance so as to form a gap therebetween for forming separated first and second seals respectively, and in that the flange part (30) of the tray that lies in said gap is not sealed to said cover (2).

13. Method according to either of claims 11 or 12, **characterized in that** said cover (2) is formed of a thermoformable material having heat sealable characteristics at least in the regions of said first (8) and second (9) seals.

## Patentansprüche

1. Verpackungsbehälter mit einer Schale (1) und einer Abdeckung (2), wobei die Abdeckung (2) entlang eines ersten Siegels (8) in dem Flanschbereich (6) der Schale an einen oberen Rand (6) der Schale versiegelt ist, wobei das erste Siegel (8) außerhalb einer Schwächungslinie (7) in der Abdeckung (2) liegt, und wobei ein zweites Siegel (9) zwischen der Abdeckung (2) und dem Schalenflansch (6) vorgesehen ist,
dadurch **gekennzeichnet,** daß
das zweite Siegel (9) ein abziehbares und dennoch gasdichtes Siegel ist, das innerhalb der Schwächungslinie (7) angeordnet ist.

2. Verpackungsbehälter nach Anspruch 1,
dadurch **gekennzeichnet,** daß
das erste Siegel (8) ein abziehbares Siegel ist.

3. Verpackungsbehälter nach einem der Ansprüche 1 oder 2,
dadurch **gekennzeichnet,** daß
die Schwächungslinie (7) in einem Bereich der Abdeckung liegt, der nicht an den Schalenflansch (30) darunter angebracht ist.

4. Verpackungsbehälter nach einem der Ansprüche 2 oder 3,
dadurch **gekennzeichnet,** daß
das erste Siegel (8) und das zweite Siegel (9) getrennt sind, und dadurch, daß das erste Siegel eine größere Abziehfestigkeit als das zweite Siegel aufweist.

5. Verpackungsbehälter nach einem der Ansprüche 1 oder 2,
dadurch **gekennzeichnet,** daß
das erste (8) und das zweite (9) Siegel durch ein fortlaufendes Siegel ohne einen Zwischenraum dazwischen ausgebildet sind, wobei die Schwächungslinie (7) somit die Begrenzung zwischen dem ersten und dem zweiten Siegel bildet.

6. Verpackungsbehälter nach zumindest einem der vorangehenden Ansprüche,
dadurch **gekennzeichnet,** daß
die Schwächungslinie (7) einen Ausgangspunkt (A) und einen Endpunkt (B) an dem äußersten Rand der Abdeckung (2) aufweist und sich zunächst derart nach innen erstreckt, daß sie zwischen dem ersten (8) und dem zweiten (9) Siegel angeordnet ist.

7. Verpackungsbehälter nach zumindest einem der vorangehenden Ansprüche,
dadurch **gekennzeichnet,** daß
die Schwächungslinie (7) eine Perforationslinie (7, 7') ist, die sich durch sowohl die Abdeckung (2) als auch den Schalenflansch (6) erstreckt.

8. Verpackungsbehälter nach zumindest einem der vorangehenden Ansprüche,
dadurch **gekennzeichnet,** daß
die Schwächungslinie (7) eine Perforationslinie ist, und dadurch, daß der Endpunkt (B) der perforierten Linie (7) von dem Ausgangspunkt (A) derselben derart getrennt ist, daß eine Greiflasche (17) für die Abdeckung zum Öffnen des zweiten Siegels (9) ausgebildet wird.

9. Verpackungsbehälter nach zumindest einem der vorangehenden Ansprüche,
dadurch **gekennzeichnet,** daß
die Abdeckung einen abgesenkten Abschnitt (20, 25) aufweist, der innerhalb des zweiten Siegels (9) angeordnet ist, und dadurch, daß der abgesenkte Abschnitt ein Wiederverschließen des Behälters durch Zusammenwirkung mit entsprechenden Einrichtungen (26) an der Schaleninnenseite gestattet.

10. Verpackungsbehälter nach Anspruch 9,
dadurch **gekennzeichnet,** daß
der abgesenkte Abschnitt (20) wenigstens ein Wandabschnitt der Abdeckung ist, der sich in einer Richtung nach unten und nach außen in Richtung des Randes der Abdeckung erstreckt und der mit wenigstens einer in ähnlicher Weise abgewinkelten Oberfläche (26) an dem oberen Rand der Schale zusammenwirkt, wobei die in ähnlicher Weise abgewinkelte Oberfläche ein Abstapelvorsprung ist.

11. Verfahren zur Herstellung eines Verpackungsbehälters mit einer Schale (1) und einer entsprechenden Abdeckung (2), wobei die Abdeckung an die Schale gefügt wird, und an einen Flanschabschnitt (6) derselben durch ein erstes Siegel (8), das außerhalb einer Schwächungslinie (7) liegt, die in der Abdeckung nahe an dessen Rand ausgebildet ist, versiegelt wird,
dadurch **gekennzeichnet,** daß
die Abdeckung (2) an die Schale (1) an der Innenseite der Schwächungslinie durch ein inneres, gasdichtes und abziehbares zweites Siegel (9) versiegelt wird.

12. Verfahren nach Anspruch 11,
dadurch **gekennzeichnet,** daß
die Siegel (8, 9) durch die Verwendung eines oder mehrerer Versiegelungswerkzeuge zum Ausbilden der Siegel (8, 9) ausgebildet werden, wobei die Versiegelungswerkzeuge innere und äußere Versiegelungswerkzeugabschnitte aufweisen, die durch einen Abstand derart getrennt sind, daß ein Zwischenraum zwischen diesen zur Ausbildung eines getrennten ersten bzw. zweiten Siegels ausgebildet wird, und dadurch, daß der Flanschteil (30) der Schale, der in dem Zwischenraum liegt, nicht an die Abdeckung (2) versiegelt wird.

13. Verfahren nach einem der Ansprüche 11 oder 12,
dadurch **gekennzeichnet,** daß
die Abdeckung (2) aus einem warmformbaren Material ausgebildet ist, das Heißversiegelungseigenschaften wenigstens in den Bereichen des ersten (8) und des zweiten Siegels (9) aufweist.

## Revendications

1. Récipient d'emballage comprenant un bac (1) et un couvercle (2), ledit couvercle (2) étant scellé à un bord supérieur (6) dudit bac le long d'un premier joint d'étanchéité (8) dans la partie formant rebord (6) dudit bac, dans lequel ledit premier joint d'étanchéité (8) est située à l'extérieur d'une ligne d'affaiblissement (7) formée dans ledit couvercle (2), dans lequel un deuxième joint d'étanchéité (9) est placé entre le couvercle (2) et le rebord (6) du bac, caractérisé en ce que ledit deuxième joint d'étanchéité (9) est un joint d'étanchéité décollable mais néanmoins étanche aux gaz, placé à l'intérieur de ladite ligne d'affaiblissement (7).

2. Récipient d'emballage selon la revendication 1, caractérisé en ce que ledit premier joint d'étanchéité (8) est un joint d'étancheité décollable.

3. Récipient d'emballage selon l'une ou l'autre des revendications 1 et 2, caractérisé en ce que la ligne d'affaiblissement (7) est placée dans une région du couvercle qui n'est pas fixée au rebord (30) du bac placé sous elle.

4. Récipient d'emballage selon l'une ou l'autre des revendications 2 et 3, caractérisé en ce que ledit premier joint d'étanchéité (8) et ledit deuxième joint d'étanchéité (9) sont séparés et en ce que ledit premier joint d'étanchéité a une résistance au décollement supérieure à celle dudit deuxième joint d'étanchéité.

5. Récipient d'emballage selon l'une ou l'autre des revendications 1 et 2, caractérisé en ce que lesdits premier (8) et deuxième (9) joints d'étanchéité sont formés par un unique joint d'étanchéité, continu, sans intervalle entre eux, ladite ligne d'affaiblissement (7) formant ainsi la limite entre lesdits premier et deuxième joints d'étanchéité.

6. Récipient d'emballage selon l'une quelconque des précédentes revendications, caractérisé en ce que ladite ligne d'affaiblissement (7) comprend un point d'origine (A) et un point linal (B) au niveau du bord le plus extérieur du couvercle (2) et s'étend d'abord vers l'intérieur pour être placée entre lesdits premier (8) et deuxième (9) joints d'étanchéité.

7. Récipient d'emballage selon l'une quelconque des précédentes revendications, caractérisé en ce que ladite ligne d'affaiblissement (7) est une ligne de perforations (7, 7') s'étendant à la fois dans ledit couvercle (2) et ledit rebord (6) du bac.

8. Récipient d'emballage selon l'une quelconque des précédentes revendications, caractérisé en ce que ladite ligne d'affaiblissement (7) est une ligne de perforations et en ce que le point final (B) de ladite ligne perforée (7) est séparé de son point d'origine (A) de manière à former une languette (17) de préhension dudit couvercle servant à ouvrir le deuxième joint d'étanchéité (9).

9. Récipient d'emballage selon l'une quelconque des précédentes revendications, caractérisé en ce que ledit couvercle comprend une partie plus basse (20, 25) située à l'intérieur dudit deuxième joint d'étanchéité (9), et en ce que ladite partie plus basse permet de refermer le couvercle par coopération avec un moyen correspondant (26) se trouvant sur l'intérieur du bac.

10. Récipient d'emballage selon la revendication 9, caractérisé en ce que ladite partie plus basse (20) est au moins une partie de paroi dudit couvercle, qui s'étend vers le bas et vers l'extérieur en direction de la périphérie du couvercle et qui coopère avec au moins une surface (26) inclinée de manière similaire située au niveau du bord supérieur du bac, ladite surface inclinée de manière similaire étant une saillie de désempilement.

11. Procédé de production d'un récipient d'emballage qui comprend un bac (1) et un couvercle (2) associé, dans lequel ledit couvercle est appliqué sur ledit bac et scellé à une partie formant rebord (6) de ce dernier par un premier joint d'étanchéité (8) placé à l'extérieur d'une ligne d'affaiblissement (7) formée dans ledit couvercle à proximité de la périphérie, caractérisé en ce que ledit couvercle (2) est scellé audit bac (1) sur le côté intérieur de ladite ligne d'affaiblissement par un deuxième joint d'étanchéité (9), intérieur, pelable et étanche aux gaz.

12. Procédé selon la revendication 11, caractérisé en ce que lesdits joints d'étanchéité (8, 9) sont formés à l'aide d'un ou plusieurs outils de fermeture étanche servant à former lesdits joints d'étanchéité (8, 9), lesdits outils de fermeture étanche comprenant des parties d'outil intérieures et extérieures séparées par une certaine distance de manière à former un intervalle entre elles et servant respectivement à former des premier et deuxième joints d'étanchéité séparés, et en ce que la partie de rebord (30) du bac qui est située dans ledit intervalle n'est pas scellée audit couvercle (2).

13. Procédé selon l'une ou l'autre des revendications 11 et 12, caractérisé en ce que ledit couvercle (2) est fait d'un matériau thermo-formable ayant des caractéristiques de thermo-étanchéité au moins dans les régions desdits premier (8) et deuxième joints (9) d'étanchéité.
